Europäisches Patentamt

European Patent Office

Office européen des brevets

(19)

(11) **EP 1 349 242 A1**

(12) **EUROPEAN PATENT APPLICATION**

(43) Date of publication:
**01.10.2003 Bulletin 2003/40**

(51) Int Cl.⁷: $H01S\ 3/30$

(21) Application number: **02360105.7**

(22) Date of filing: **27.03.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Bayart, Dominique**<br>  **92140 Clamart (FR)**<br>• **Leplingard, Florence**<br>  **78000 Versailles (FR)** |
| (71) Applicant: **ALCATEL**<br>**75008 Paris (FR)** | (74) Representative: **Rausch, Gabriele, Dr. et al**<br>**Alcatel**<br>**Intellectual Property Department, Stuttgart**<br>**70430 Stuttgart (DE)** |

(54) **Raman fiber amplification stage; optical system and method to control the raman amplification stage**

(57)     The present invention relates to a cascaded multi-wavelength Raman fiber amplification stage with a length of optical fiber having input (15) and output (16) sections, pump laser means (11) for introducing pump radiation of wavelength $\lambda_p$ into said length of optical fiber (13), at least two pairs of reflector means (151,161;...; 159, 169), spaced-apart the length of optical fiber (13), at least one of said pairs of reflector means has an output reflector mean (161, 162, 163), with a reflectivity lower than 100% and a feed back loop with: a tap coupler (20) for deriving a low percentage of the optical output signal as a optical monitor signal (28), at least one wavelength selecting element (21, 25,26, 27) for the optical monitor signal (28), at least one opto-electrical converter (23, 231,232,233) generating a electrical signal and a control circuit (27) for the electrical signal connected to adjustment means (181, 182, 183) adjusting the reflectivity of the output reflector means( 161, 162, 163).

**Fig. 2**

## Description

Background of the Invention:

The present invention belongs to the field of cascaded Raman fiber lasers with an active control mechanism as well as to devices and systems containing such elements.

Raman amplification is known to be effective to provide a flat gain over a wide signal wavelength band when using several pump wavelengths. Broadband Raman amplification is therefore used to amplify signals over a wide wavelength band, and is thus of particular interest in WDM (Wavelength Division Multiplexing) optical transmission systems.

In order to provide the necessary pump wavelengths for the Raman amplification to be efficient (i.e. for the gain to be substantially flat), it is known to use a cascaded Raman laser having several output channels. The article "A high-efficiency power-stable three-wavelength configurable Raman fiber laser", Mermelstein et al., Paper PD3, OFC 2001 discloses a WDM system using a multi-wavelength cascaded Raman fiber laser to provide pump wavelengths of 1427, 1455 and 1480 nm to a broadband Raman amplifier.

Cascaded Raman fiber lasers are known per se e.g. from document EP-0 651 479.

Such lasers comprise a length of optical waveguide, typically silica-based optical fiber, and means for introducing pump radiation of wavelength $\lambda_p$ into the length of optical waveguide. The device further comprises n (n $\geq$ 2) spaced apart pairs of reflector means that define optical "cavities" for electromagnetic radiation of a predetermined wavelength, the cavities comprising at least a portion of the length of optical waveguide. Each reflector has an associated center wavelength $\lambda_i$ of a reflection band, and two reflectors of a given pair have substantially the same center wavelength, such that the reflectors of a given pair define an optical cavity of length $L_i$ for radiation of wavelength $\lambda_i$ essentially equal to the center wavelength of the reflectors of the given pair. With $\Delta\lambda_i$ (i=1, ..., n) being a length within the appropriate Stokes band associated with the fiber, $\lambda_i = \lambda_{i-1} + \Delta\lambda_i$ ($\lambda_0 = \lambda_p$). The reflectors have a high reflectivity, typically greater than 95%.

Therefore, the pump power can be converted, in a multiplicity of stages, to a power at a desired longer wavelength. The wavelength $\lambda_i$ at a given stage is determined by the center wavelength of the relevant pair of reflectors, provided that the center wavelength is chosen such that the wavelength difference ($\Delta\lambda_i$) between the preceding stage ($\lambda_{i-1}$) and the given stage ($\lambda_i$) is within the Stokes band associated with the optical fiber. Such a laser further comprises a low reflectivity reflector for radiation of wavelength $\lambda_s$ on the output side of the device, so that most of the power of wavelength $\lambda_s$ is coupled out of the laser.

Thus, cascaded Raman lasers are based on Raman scattering, which is a non-linear optical process that involves coupling of light propagating through a non-linear medium to vibration modes of the non-linear medium an re-radiation at a different, typically longer wavelength. A photon is reflected back and forth in each optical cavity before undergoing Raman scattering that results in a photon of longer wavelength that then passes out of the cavity into the next optical cavity.

When a silica-based optical fiber is used as the non-linear medium, the maximum Raman gain occurs at a frequency shift of 13,2 THz, corresponding to a wavelength shift of about 50 to 100 nm for pump wavelengths between about 1000 and 1500 nm.

A cascaded multi-wavelength Raman fiber laser differs from a single-wavelength Raman fiber laser as described above in that it has several output wavelengths at the same time. It is based on the idea of splitting the Raman gain between several Stokes wavelengths having similar power levels in order to obtain several output wavelengths at the same time. To do so, the output reflectors of the pairs of reflectors having the desired output wavelengths as center wavelengths have a low reflectivity, so that most of the power of the desired output wavelengths is coupled out of the laser.

The known cascaded multi-wavelength Raman fiber laser described in the above article is configurable, i.e. the power at each wavelength can be varied by changing the reflectivity of the Bragg gratings used to form the cavity. However, a power control of the individual output channels of such a configurable multi-wavelength Raman fiber laser is not sufficient.

Indeed, when the outputs of the multi-wavelength Raman fiber laser are used as pump wavelengths for a broadband Raman amplifier for example, it is important that such pump wavelengths have precisely controlled respective powers, namely in order to ensure a similar power level on each output channel. This is not possible with the laser described in the above article.

Besides, it is also desirable to be able to select the required number of output wavelengths; in other words, it is desired to be able to use the three-wavelength Raman fiber laser described in the above article as a two-wavelength laser, or even as a single-wavelength laser.

It is therefore a goal of the present invention to provide a multi-wavelength cascaded Raman fiber laser having precisely controllable output power on at least some output channels, and also being suitable for use with less output wavelengths than the maximum possible output wavelengths.

Summary of the Invention:

To this end, the object of the present invention is a cascaded multi-wavelength Raman fiber laser adapted for emitting radiation of several distinct wavelengths with a length of optical fiber having input and output sections, with means for introducing pump radi-

ation of wavelength $\lambda_p$ into said length of optical fiber with at least one pair of spaced-apart reflector means, defining an optical cavity belonging to said optical fiber and with means for deriving a control signal from the output wavelength to adjust the reflectivity of said output reflector means.

In one preferred embodiment one of the wavelengths of the optical monitor signal is selected by a tunable filter. In another preferred embodiment the wavelengths of the optical monitor signal are demultiplexed .The parameters for adjusting the reflection means are calculated in a control circuit after opto-electrical conversion.

It is possible to adjust wavelength by wavelength in a serial process or to adjust all wavelength in a parallel processing.

With this parameters the reflection means are adjusted. By choosing output reflector means having an adjustable reflectivity at the output wavelengths, it is possible to dynamically adjust the power of the output channels so as to precisely ensure a similar power level on each output channel, which is required when the laser is used as a pump for broadband Raman amplification.

Therefore, precise values of the reflectivity of each output reflector means are obtained which allows equalization of the power of the output channels.

In addition, it has been found that the power of the output channels also depends from the length of the fiber, the intra-cavity losses and the splicing losses. It is therefore all the more important to use adjustable output reflectors according to the invention as there are many parameters which may influence the output powers. The laser according to the present invention allows a dynamic control of the output power.

Preferably, the center wavelength of said output reflector means is adjustable. This is allows to "decouple" the center and output wavelengths of the output reflector means; as the output power of the reflector means is maximum at its center wavelength, shifting the center wavelength of the output reflector means thus allows to adjust the output power.

In this context, adjustment of the center wavelength of said output reflector means can be made by increasing said center wavelength.

Adjustment of the reflectivity of the output reflectors means may be carried out, according to the invention, by adjusting the center wavelength of the reflection band of said output reflector. A preferred solution to reach such a goal is to choose a filter function of the reflector means having a shape which is not a step, and which is close enough to a triangle.

Indeed, in such a case, it is possible to gradually change the output power, which allows the maximum flexibility.

In a preferred embodiment for WDM applications, the laser comprises at least two pairs of reflector means and is adapted for emitting radiation of at least two distinct wavelengths $\lambda_{s1}$, $\lambda_{s2}$.

When the reflector means are Bragg gratings, this can be done by submitting said Bragg grating to strain (by heating or mechanically) in order to alter its transmission characteristics by e.g. changing its pitch. Changing the pitch of the Bragg grating leads to a shift of its center wavelength. In such a case, the reflector means which are not output reflector means are such that the difference between their wavelengths of maximum and minimum reflectivity is less than or equal to 0,5 nm.

The present invention also relates to an optical fiber communication system comprising a fiber laser (10) which further comprises:

— transmitter means (101) that comprise means for generating a signal radiation (103) of wavelength $\lambda_{signal}$
— receiver means (102) spaced apart from said transmitter means (101) that comprise means for detecting the signal radiation (103) at $\lambda_{signal}$,
— optical fiber transmission means (104) that connect said transmitter (101) and receiver (102) means
— means (107) for coupling the output radiation (106) of wavelength $\lambda_{s1}$ of said Raman laser (10) into said optical fiber transmission means (104).

The invention also relates a method for adjusting the raman fiber amplification stage in a feed back loop.

<u>Short description of the invention</u>

These and other objects of the present invention will be appear more clearly from the following description of a preferred embodiment of the present invention, given by way of example with respect to the accompanying drawings.

In the drawings:

• Figure 1 schematically depicts a cascaded Raman fiber laser according to prior art
• Figure 2 shows a first control mechanism
• Figure 3 illustrate schematically a second control mechanism
• Figure 4 shows a optical transmission system

In the figures, common elements or elements having the same function are identified by the same reference numerals.

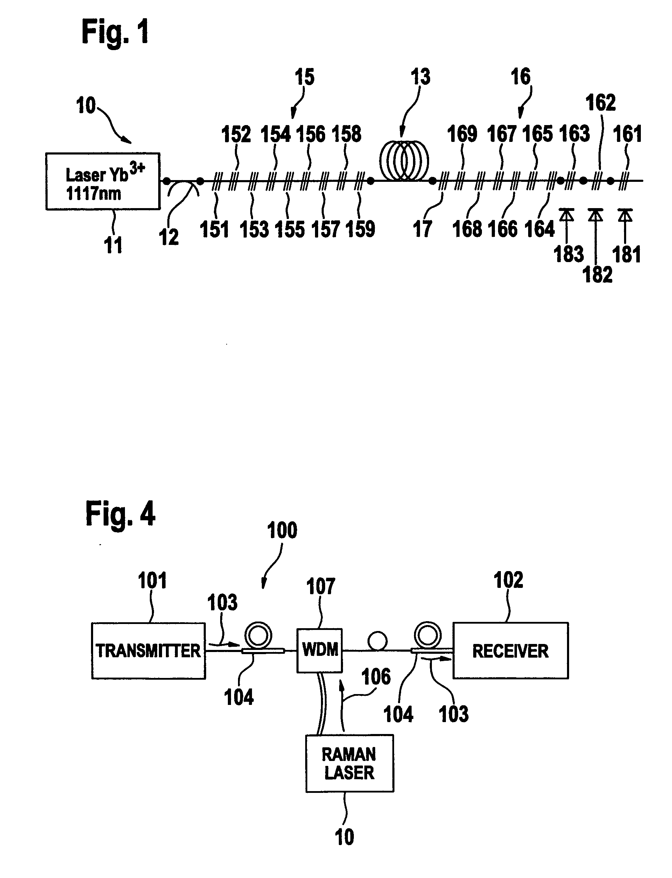

Figure 1 schematically depicts an exemplary embodiment of a Raman laser 10. Pump radiation of wavelength $\lambda_p$, e.g. 1117 nm, from pump source 11 comprising a $Yb^{3+}$ laser is coupled via coupler 12 into a germano-silicate single mode optical fiber 13, and radiations of wavelengths 1440, 1455 and 1487 nm are emitted from the output end of the fiber.

The fiber 13 has an input section 15 and an output section 16, and comprises in-line refractive index gratings such as Bragg gratings 151 to 159, 161 to 169. Gratings 151 and 161, 152 and 162, ... 159 and 169 form matched reflector pairs of e.g. center wavelengths 1170, 1229, 1292, 1364, 1306, 1394, 1440, 1455 and 1487 nm respectively. Gratings 151 to 159 belong to input section 15, and gratings 161 to 169 belong to output section 16. All gratings except gratings 161, 162 and 163 desirably have high reflectivity, with substantially more than 98% reflectivity at the center wavelength.

Reflectivity of a grating (or of any reflector means) is defined as the ratio between the power of the optical wave reflected by the grating to the power of the optical wave entering the grating at a given wavelength. Hence, the lower the reflectivity at a given wavelength, the higher the output power of the reflector (i.e. the power of the wave not reflected by the reflector and thus transmitted by the reflector) at said given wavelength. For Bragg gratings, reflectivity is maximum at their center wavelength.

Pairs 151-161, 152-162 and 153-163 of gratings have respective initial center wavelengths equal to the output wavelengths of laser 10. The reflectivity of Bragg gratings 161, 162 and 163 at their center wavelength is lower than that of the respective corresponding gratings 151, 152 and 153. It is e.g. in the order of 20%, in order to emit the output wavelength out of the laser.

In addition to the gratings 151 to 159 and 161 to 169, an optional grating 17 can be used, having a center wavelength equal to $\lambda_p$. It serves as pump reflector.

The reflectivity of each of the Bragg gratings 161, 162 and 163, called output Bragg gratings, is adjustable at the output wavelengths. To this end, it has been chosen to adjust the center wavelength of Bragg gratings 161, 162 and 163.

Indeed, if the center wavelength of an output Bragg grating is shifted, the reflectivity of this grating at the output wavelength is decreased as compared to its initial value. The initial value of the reflectivity is the one for which the center wavelength of said output grating is equal to, or even preferably lower than the center wavelength of the corresponding input grating, which is in turn equal to an output wavelength of the laser.

By selecting an appropriate profile of the reflectivity vs. wavelength function of the output Bragg gratings, it is then possible to perform simple and accurate adjustments of the center wavelength of the output Bragg gratings.

There exist solutions well known to the man skilled in the art to shift the center wavelength of a Bragg grating.

This may be done by modifying the pitch of the grating, e.g. by heating the grating with Peltier elements. Thermal expansion of the fiber under heat increases the pitch $\Lambda$ of the grating and thus the center wavelength $\lambda_{Bragg}$ according to the following relationship:

$$\lambda_{Bragg} = \Lambda/2.n_{eff}$$

where $n_{eff}$ is the refractive index of the fiber.

Another possible solution is to stretch the grating with an adapted mechanical system. Such systems are described e.g. in the article "Chirping optical fiber Bragg gratings using tapered-thickness piezoelectric ceramic", M. Pacheco et al., Electron. Letters, vol. 34, pp. 2348-2350, 1998. The article "Dispersion variable fiber grating using a piezoelectric stack", M.M. Ohn et al., Electron. Letters, vol. 32, pp. 2000-2001, 1996 also describes means for stretching Bragg gratings.

The advantage of the use of such means lies in the fact that the shift in center wavelength is proportional to the stretching of the Bragg grating, so that there is a linear relationship between the reflectivity of the Bragg grating and the output control voltage of the piezoelectric means.

The invention is not limited to an output of three different wavelength. Also solutions with more than three, for example six or more are realized with the inventional device.

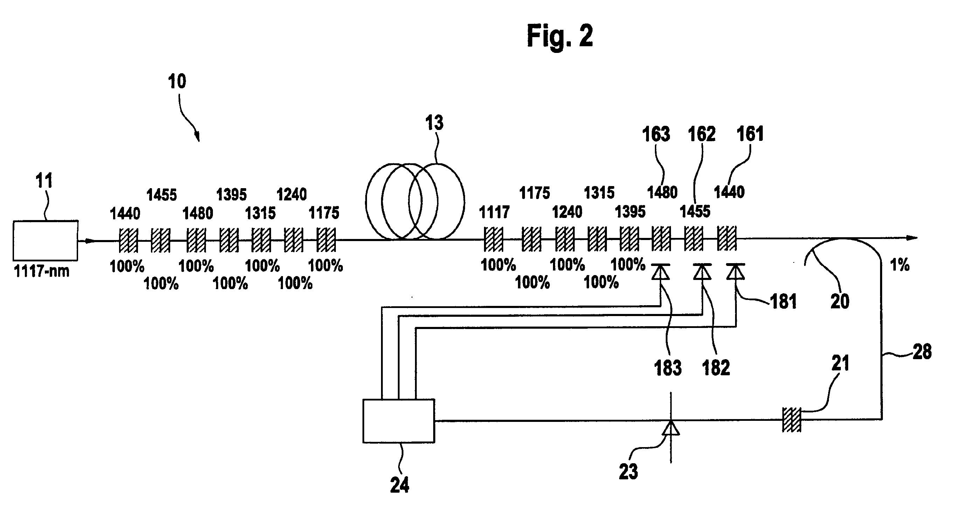

Figure 2 shows a first embodiment for deriving the control parameters in a feed back loop.

A tap coupler 20 is connected to the output line of the Raman amplifying stage 10. The tap coupler 10 is connected with an Fabry Perot filter 21 and a photodiode 23. The electrical output of the photodiode is linked to a control circuit 24. The control circuit has connections to the adjustment means 181, 182, 183 of the output reflection means 161, 162, 163.

The tap coupler 10 branches about 1 percent of the output signal as optical monitor signal in the feed back loop. The optical monitor signal is a mixture of all Raman amplification stage wavelengths in our example of 1480, 1455 and 1440 nm . This wavelength mix is fed through a tunable Fabry Perot filter. With this filter 21 one of the three wavelength is selected by tuning the spectral range of the filter. A Fabry Perot filter can be tuned by changing the optical distance of the cavity. The Fabry Perot filter can be replaced by all other kind of filters for selecting one of the wavelengths of the mix. The resulting one wavelength is measured with the photodiode 23. The electrical signal is fed into the control circuit. There the electrical photodiode voltage signal is compared with a predefined threshold value for the electrical voltage. This predefined threshold is fixed for a fixed output power of the Raman amplifying stage.

For example: The user wants to run the Raman amplifying stage with two of the possible three wavelengths 1455 nm and 1440 nm. Than the cavity for the 1480 nm line must be detuned. To adjust the Raman amplifying stage you have to start with the measurement for the 1480 nm wavelength. The Fabry Perot filter which is in a first step shifted to select the 1480 nm wavelength. The result is a measurement of the output power of the 1480 nm line. The threshold for this power is about zero and the control circuit generate the parameter to adjust the adjusting mean 183. The parameter has the form of an electrical signal which depends from the way the adjustment of the reflection mean is realized. For example a piezo element put some strain on a fiber Bragg grating. The electrical signal for the piezo element must be high to apply a high stain to the fiber and to obtain a high detuning factor.

The control circuit applies a fixed high electrical signal value to obtain the detuning. In another embodiment the control unit applies signals in several steps, waiting for a new measurement of the optical monitoring signal and adjusting the reflection mean step by step. For an adaptation of all Raman lines the control circuit has to monitor wavelength per wavelength and to adapt the adjusting means in a serial way.

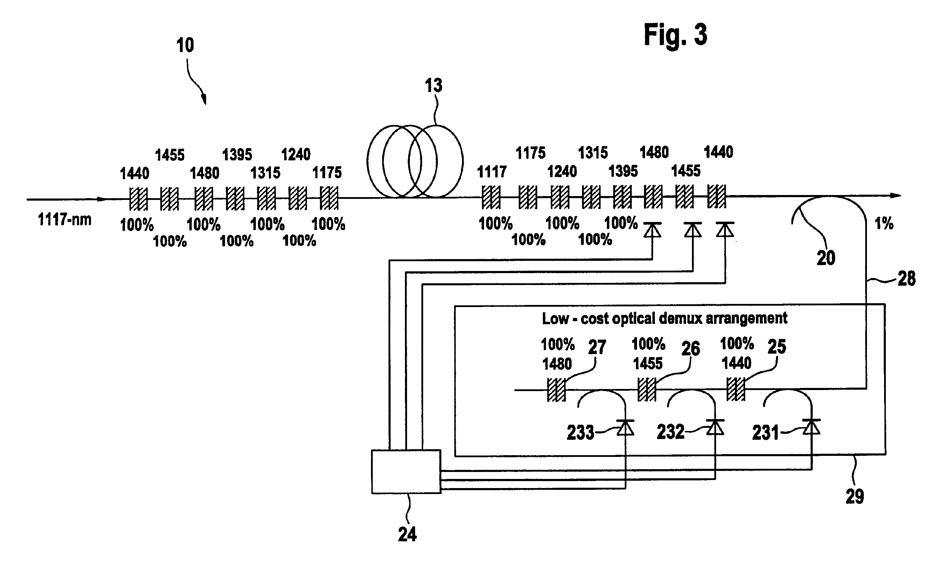

Figure 3 shows a second embodiment of the invention. A tap coupler 20 is connected to the output line of the Raman amplifying stage 10. The output of the tap coupler 10 is linked to a demultiplexing stage 29. This stage consists of drop filters 25,26,27 for each of the Raman wavelengths and taps to drop the single reflected wavelengths. The single taps are connected to single photodiodes 231, 232, 233 which have separate connections to the control circuit 24. The control circuit therefore receives the signals of the photodiodes parallel and can parallel process the signals to derive at least one parameter for adjusting the reflectivity of the reflection means. With this demultiplexing stage the parallel monitoring of all three Raman wavelengths is possible. The electrical signals for all three lines are measured and the control circuit can adapt three adjusting means in parallel.

Figure 4 schematically depicts an optical system 100 according to the invention, incorporating a laser as laser 10 of Figure 1.

Optical system 100 is a Raman pre-amplified optical fiber communication system comprising:

- transmitter means 101
- receiver means 102 spaced apart from transmitter means 101.

Signal radiation 103 (e.g. of wavelength 1550 nm) is coupled into conventional transmission fiber 104 and transmitted there through to the receiver means 102. Pump radiations 106 for the distributed Raman amplification is provided by laser 10 according to the invention, coupled into the transmission fiber 104 by conventional WDM 107. The Raman laser 10 provides radiations of wavelengths 1440, 1455 and 1487 nm suitable for pumping of the transmission fiber 104 such that the signal radiation 103 is amplified.

For clarity sake, only one WDM multiplexer has been shown on Figure 4, but it is to be understood that several such means are disposed along the length of transmission fiber 104.

Of course, the present invention is not limited to the embodiments described above.

Although in-line refractive index fiber gratings are currently preferred reflector means, use of other reflector means is also contemplated. For instance, an optical cavity can be formed by coupling the length of optical fiber to planar waveguide reflectors.

In addition, ordering of the reflector means according to the teachings of US-5 815 518 can also be applied to lasers of the present invention.

At last, the invention applies as well to WDM transmission systems using Raman pre-amplification with Erbium-doped fiber amplifiers (EDFAs) as to WDM transmission systems using Raman amplification alone.

The invention can also be applied for pumping a Dispersion Compensation Fiber (DCF) instead of a line fiber.

## Claims

1. A cascaded multi-wavelength Raman fiber amplification stage comprising:

   — a length of optical fiber (13) having input (15) and output (16) sections
   — pump laser means (11) for introducing pump radiation of wavelength $\lambda_p$ into said length of optical fiber (13)
   — at least two pairs of reflector means (151,161;...;159, 169), spaced-apart the length of optical fiber (13)
   — at least two of said pairs of reflector means has an output reflector mean (161, 162, 163), with a reflectivity lower than 100%
   — a feed back loop with:
   — a tap coupler (20) for deriving a low percentage of the optical output signal as a optical monitor signal (28)
   — at least one wavelength selecting element (21, 25,26, 27) for the optical monitor signal (28)
   — at least one opto-electrical converter (23, 231,232,233) generating a electrical signal
   — a control circuit (27) for the electrical signal connected to adjustment means (181, 182, 183) adjusting the reflectivity of the output reflector means( 161, 162, 163).

2. A cascaded multi-wavelength Raman fiber amplification stage according to claim 1 where the tap coupler (20) is connected to a tunable wavelength selective filter (23) selecting one wavelength and to a photodiode (23).

3. A cascaded multi-wavelength Raman fiber amplification stage according to claim 2 where the wavelength selective filter is a tunable Fabry Perot filter.

4. A cascaded multi-wavelength Raman fiber amplification stage according to claim 1 where the feed back loop comprises a wavelength demultiplexing filter (29) with photodiodes (231,232,233) for the simultaneously demultiplexed wavelengths.

5. A cascaded multi-wavelength Raman fiber amplification stage according to claim 1 wherein that said reflector means are fiber Bragg gratings.

6. A cascaded multi-wavelength Raman fiber amplification stage according to claim 1 wherein shifting of the center wavelength is obtained by heating or straining said Bragg grating.

7. Optical fiber communication system comprising a fiber laser (10) according to claim 1 which further comprises:

   — transmitter means (101) that comprise means for generating a signal radiation (103) of wavelength $\lambda_{signal}$
   — receiver means (102) spaced apart from said transmitter means (101) that comprise means for detecting the signal radiation (103) at $\lambda_{signal}$,
   — optical fiber transmission means (104) that connect said transmitter (101) and receiver (102) means
   — means (107) for coupling the output radiation (106) of wavelength $\lambda_{s1}$ of said Raman laser (10) into said optical fiber transmission means (104).

8. Method for controlling a cascaded multi-wavelength Raman fiber amplification stage using a feed back loop

   — taping an optical monitoring signal
   — selecting at least one wavelength of the optical monitor signal
   — converting the optical monitor signal of at least one wavelength to an electrical control signal
   — deriving control parameters in a control circuit
   — adjusting output reflection means according to the said parameters.

**Fig. 1**

**Fig. 4**

Fig. 2

**Fig. 3**

Low - cost optical demux arrangement

EP 1 349 242 A1

**European Patent Office**

## EUROPEAN SEARCH REPORT

**Application Number**

EP 02 36 0105

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 984 532 A (LUCENT TECHNOLOGIES INC) 8 March 2000 (2000-03-08) * paragraph '0035! - paragraph '0039!; figure 7 * | 1,8 | H01S3/30 |
| X | MERMELSTEIN M D ET AL: "CONFIGURABLE THREE-WAVELENGTH RAMAN FIBER LASER FOR RAMAN AMPLIFICATION AND DYNAMIC GAIN FLATTENING" IEEE PHOTONICS TECHNOLOGY LETTERS, IEEE INC. NEW YORK, US, vol. 13, no. 12, December 2001 (2001-12), pages 1286-1288, XP001076759 ISSN: 1041-1135 * page 1287, column 1 - column 2; figure 5 * | 1,8 | |
| A | US 5 691 999 A (BALL GARY A ET AL) 25 November 1997 (1997-11-25) * column 4, line 45 - line 51; figure 1 * | 1,8 | |
| A | WO 00 04613 A (DONAM SYSTEMS INC ;KOREA INST SCIENCE TECHNOLOGY (KR); YUN SEOK HY) 27 January 2000 (2000-01-27) * page 10 - page 11; figure 8 * | 1,8 | TECHNICAL FIELDS SEARCHED (Int.Cl.7) H01S |

The present search report has been drawn up for all claims

| Place of search | Date of completion of the search | Examiner |
|---|---|---|
| THE HAGUE | 5 March 2003 | Hervé, D |

EPO FORM 1503 03.82 (P04C01)

EP 1 349 242 A1

## ANNEX TO THE EUROPEAN SEARCH REPORT
## ON EUROPEAN PATENT APPLICATION NO.

EP 02 36 0105

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2003

| Patent document cited in search report | | | Publication date | Patent family member(s) | | Publication date |
|---|---|---|---|---|---|---|
| EP | 0984532 | A | 08-03-2000 | US | 6163552 A | 19-12-2000 |
| | | | | DE | 69900360 D1 | 22-11-2001 |
| | | | | DE | 69900360 T2 | 11-07-2002 |
| | | | | EP | 0984532 A1 | 08-03-2000 |
| | | | | JP | 2000075150 A | 14-03-2000 |
| US | 5691999 | A | 25-11-1997 | CA | 2200569 A1 | 11-04-1996 |
| | | | | DE | 69506273 D1 | 07-01-1999 |
| | | | | DE | 69506273 T2 | 22-04-1999 |
| | | | | EP | 0783780 A1 | 16-07-1997 |
| | | | | ES | 2125664 T3 | 01-03-1999 |
| | | | | JP | 10507036 T | 07-07-1998 |
| | | | | WO | 9610854 A1 | 11-04-1996 |
| WO | 0004613 | A | 27-01-2000 | KR | 2000008448 A | 07-02-2000 |
| | | | | CA | 2303092 A1 | 27-01-2000 |
| | | | | CN | 1276924 T | 13-12-2000 |
| | | | | EP | 1018195 A1 | 12-07-2000 |
| | | | | JP | 2002520888 T | 09-07-2002 |
| | | | | WO | 0004613 A1 | 27-01-2000 |
| | | | | US | 2002071173 A1 | 13-06-2002 |

EPO FORM P0459

For more details about this annex : see Official Journal of the European Patent Office, No. 12/82

11